Europäisches Patentamt

European Patent Office

Office européen des brevets

(19)

(11)  **EP 1 027 636 B1**

(12)  **FASCICULE DE BREVET EUROPEEN**

(45) Date de publication et mention
de la délivrance du brevet:
**03.03.2004  Bulletin 2004/10**

(21) Numéro de dépôt: **98947608.0**

(22) Date de dépôt: **06.10.1998**

(51) Int Cl.$^7$: **G05D 1/03**

(86) Numéro de dépôt international:
**PCT/FR1998/002129**

(87) Numéro de publication internationale:
**WO 1999/023543 (14.05.1999 Gazette 1999/19)**

(54)  **PROCEDE ET DISPOSITIF DE LOCALISATION ET DE GUIDAGE D'UN MOBILE MUNI D'UNE CAMERA LINEAIRE**

VERFAHREN UND VORRICHTUNG ZUR ORTUNG UND FÜHRUNG EINES MIT EINER LINEAREN KAMERA VERSEHENEN FAHRZEUGS

METHOD AND DEVICE FOR LOCATING AND GUIDING A MOBILE UNIT EQUIPPED WITH A LINEAR CAMERA

(84) Etats contractants désignés:
**AT BE CH CY DE DK ES FI FR GB GR IE IT LI LU MC NL PT SE**

(30) Priorité: **04.11.1997  FR 9713849**

(43) Date de publication de la demande:
**16.08.2000  Bulletin 2000/33**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeurs:
  • **PARENT, Michel
    F-78000 Versailles (FR)**
  • **GUALINO, David
    F-78860 Saint Nom la Breteche (FR)**

(74) Mandataire: **Plaçais, Jean-Yves et al
Cabinet Netter,
36, avenue Hoche
75008 Paris (FR)**

(56) Documents cités:
**EP-A- 0 720 075          EP-A- 0 725 326
US-A- 5 555 312**

• **BEHRINGER R ET AL: "SIMULTANEOUS ESTIMATION OF PITCH ANGLE AND LANE WIDTH FROM THE VIDEO OF A MARKED ROAD" PROCEEDINGS OF THE IEEE/RSJ/GI INTERNATIONAL CONFERENCE ON INTELLIG ROBOTS AND SYSTEMS: ADVANCED ROBOTICS AND THE REAL WORLD, MUNICH, SEPT. 12 - 16, 1994, vol. VOL. 2, 12 septembre 1994, pages 966-973, XP000514601 INSTITUTE OF ELECTRICAL AND ELECTRONICS ENGINEERS**
• **NEGISHI S ET AL: "AUTOMATIC TRACKING OF HIGHWAY ROAD EDGE BASED ON VEHICLE DYNAMICS" SYSTEMS & COMPUTERS IN JAPAN, vol. 26, no. 6, 1 juin 1995, pages 59-69, XP000525944**

**Description**

La présente invention concerne la localisation et le guidage d'un mobile muni d'une caméra linéaire.

Elle trouve une application dans la localisation et/ou le guidage d'un véhicule automobile roulant sur une chaussée le long de laquelle est répartie des balises fixes qui définissent une trajectoire de référence, les balises étant lumineuses à intermittence de façon active (sources émettrices à intermittence) ou de façon passive (balises rétro-réflectrices éclairées par un flash).

On connaît déjà plusieurs techniques pour localiser et guider des véhicules automobiles.

L'une de ces techniques, appelée "filoguidage" consiste à asservir de façon continue le véhicule automobile sur un fil conducteur logé dans le sol et alimenté à une fréquence choisie.

Une autre technique connue consiste à asservir le véhicule automobile sur des marqueurs magnétiques, implantés dans le sol. Un ou plusieurs détecteurs embarqués dans le véhicule détectent la présence des marqueurs lorsque le véhicule passe au-dessus desdits marqueurs, et permettent ainsi de localiser le véhicule par rapport aux marqueurs.

Encore une autre technique connue consiste à réaliser un filoguidage sur un câble rayonnant disposé le long de la chaussée sur laquelle évolue le véhicule. Un capteur embarqué dans le véhicule détermine la distance séparant le câble du véhicule. Un asservissement maintient cette distance à une valeur constante.

De telles techniques ont l'inconvénient de nécessiter des infrastructures dont la mise en oeuvre au sol et dans le véhicule est généralement coûteuse. De plus, ces techniques donnent seulement des informations sur le tronçon de la route qui se trouve à proximité immédiate du véhicule. En conséquence, ces informations ne permettent pas une prédiction du tracé suivant de la route, ce qui empêche la régulation de la vitesse du véhicule en fonction dudit tracé suivant.

Une autre technique connue utilise le traitement d'images pour localiser un mobile par rapport à des repères visibles sur la chaussée tels que des bandes blanches. Toutefois, cette technique n'est pas non plus satisfaisante en raison des défauts de marquage (ancienne bande blanche, travaux sur la chaussée, flaque d'eau, reflet de soleil) qui perturbent le traitement d'images.

La présente invention apporte une solution à ces problèmes.

Elle part d'un procédé de localisation d'un mobile, muni d'une caméra de prise de vues de type à barrette linéaire d'éléments photosensibles, orientée en direction connue par rapport à des axes de référence liés au mobile, des moyens traitement d'images, ainsi que des moyens de capture d'informations relatives au déplacement du mobile.

Selon une définition générale de l'invention, le procédé comporte les étapes consistant :

- a) répartir dans la zone d'évolution du mobile des balises fixes, lumineuses à intermittence de façon active et/ou passive,

- b) au niveau du mobile, prendre à une cadence choisie une paire d'images linéaires différentes du même champ-image, l'une dans laquelle la ou les balises sont lumineuses, l'autre dans laquelle la ou les balises ne sont pas lumineuses,

- c) traiter la paire d'images linéaires pour en effectuer la soustraction point par point ;

- d) obtenir au moins un point brillant à l'aide de la soustraction des deux images linéaires, représentatif d'au moins une balise lumineuse dans l'environnement ;

- e) calculer, à partir d'informations relatives au déplacement du mobile, de la position du point brillant sur la barrette linéaire, ainsi que sa dérivée, une première information relative à la distance séparant la balise ainsi représentée et un repère lié au mobile, et une seconde information relative à la position angulaire de la balise par rapport audit repère lié au mobile, ce qui permet, en fonction des première et seconde informations ainsi calculées, de localiser de façon relative le mobile par rapport à ladite balise.

Selon un premier mode de réalisation de l'invention, l'étape e) comprend en outre une localisation absolue du mobile par rapport à un repère fixe lié à deux balises distinctes susceptibles d'êtres vues simultanément, ladite localisation absolue consistant à calculer à un seul instant donné une localisation relative par rapport à chaque balise comme décrit ci-avant, le cap du mobile par rapport aux deux balises, et les coordonnées d'un point choisi du mobile par rapport audit repère fixe lié aux deux balises.

Selon un second mode de réalisation de l'invention, l'étape e) comprend en outre une localisation absolue du mobile par rapport à un repère fixe lié à deux balises susceptibles d'être vues au moins successivement selon le déplacement du mobile, ladite localisation absolue consistant à calculer à un premier instant donné une première localisation relative par rapport à une première balise comme décrit ci-avant, à calculer à un second instant donné, suivant du premier instant, à calculer une seconde localisation relative du mobile par rapport à une seconde balise, qui suit la première balise selon le déplacement du mobile, comme décrit ci-avant, à calculer par odométrie le déplacement du mobile et le cap du mobile par rapport auxdites première et seconde balises et à calculer les coordonnées d'un point choisi du mobile par rapport au-dit repère fixe.

Avantageusement, la pluralité des balises est répartie le long de la chaussée pour définir une trajectoire de référence, et le procédé comprend en outre une étape f) consistant à déterminer ladite trajectoire de référence à l'aide de la localisation relative et/ou absolue du mobile comme décrit ci-avant et à guider le mobile en maintenant une certaine distance entre le mobile et ladite trajectoire de référence.

Un tel procédé permet au mobile de prédire le tracé suivant de la route en vue par exemple de réguler la vitesse du mobile.

La présente invention a également pour objet un dispositif pour la mise en oeuvre du procédé selon l'invention.

D'autres caractéristiques et avantages de l'invention apparaîtront à la lumière de la description détaillée ci-après, et des dessins dans lesquels :

- la figure 1 représente schématiquement un mobile tel qu'un véhicule automobile prenant des vues de son environnement qui comprend notamment une balise ;

- la figure 2 représente schématiquement les moyens essentiels et constitutifs de la caméra linéaire et du flash selon l'invention ;

- la figure 3 est une vue de face du support de la caméra qui comprend des diodes électroluminescentes disposées autour de l'objectif de la caméra selon l'invention pour réaliser un flash ;

- les figures 4A à 4C illustrent l'obtention de deux images linéaires du même champ-image, l'une sans flash, l'autre avec flash, et la soustraction point par point pour localiser une balise lumineuse sur la barrette linéaire;

- la figure 5 illustre un premier mode de localisation absolue du mobile obtenue à un instant donné par rapport à deux balises distinctes et susceptibles d'être vues simultanément selon l'invention ; et

- la figure 6 illustre un second mode de localisation absolue du mobile obtenue à deux instants donnés par rapport à deux balises susceptibles d'être vues au moins successivement selon l'invention.

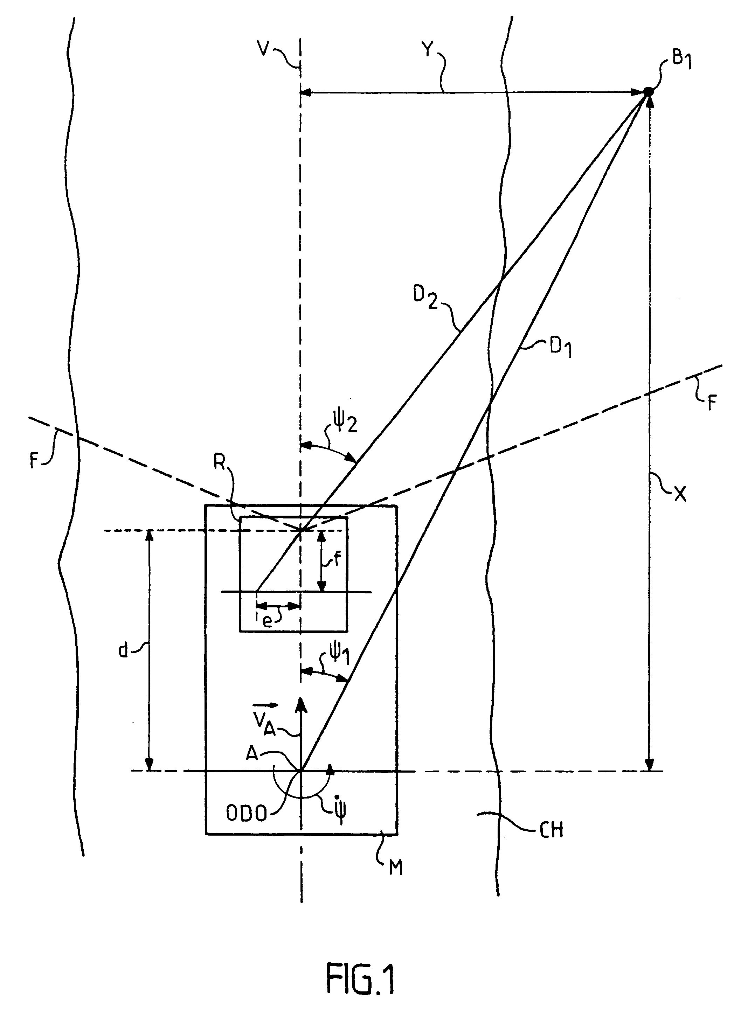

Sur la figure 1, un mobile tel qu'un véhicule automobile M évolue sur une chaussée CH, le long de laquelle est disposée au moins une balise B1. Le mobile porte un appareil de repérage comprenant une caméra et le cas échéant un flash que l'on décrira plus en détail ci-après. La caméra prend des vues de son environnement selon un champ F avec un axe de visée V.

L'environnement du mobile comprend une série de balises telles que B1, propres à émettre ou réfléchir, à intermittence, en direction du mobile M une lumière, avantageusement de type infrarouge IR pour ne pas gêner les autres automobilistes.

Dans une première réalisation, les balises peuvent être elles-mêmes des sources émettrices actives à intermittence en lumière IR, munies d'alimentations autonomes ou bien alimentées sur le secteur.

Dans une variante préférentielle, le mobile M est équipé d'un flash qui éclaire en lumière infrarouge la zone de visée de l'appareil de repérage à une cadence choisie. Les balises sont alors passives et simplement constituées de rétro-réflecteurs, tels que des catadioptres. Par exemple, le mobile lui-même est autonome, c'est-à-dire d'une part automoteur, et d'autre part susceptible de fonctionner en pilotage automatique ou en assistance pour le guidage latéral que l'on décrira plus en détail ci-après.

Le dispositif de repérage est par exemple fixé à l'intérieur de l'habitacle du véhicule, au niveau du rétroviseur intérieur du conducteur. La caméra peut pointer sensiblement vers le bas, par exemple avec un angle d'environ 5° par rapport au plan horizontal.

L'axe de visée V de l'appareil de repérage est orienté en direction connue par rapport à des axes de références liés au mobile. Il est admis dans la suite que cette direction est fixe, orientée vers l'avant du mobile.

De façon connue, le véhicule comprend des moyens de capture d'informations relatives au déplacement du mobile, par exemple des informations de type odométrique. Par exemple, des codeurs ODO sont placés sur les roues non motrices du véhicule (ici le point A du véhicule en référence à la figure 1 correspond au centre de l'essieu arrière du mobile). Des moyens de calcul (non représentés) embarqués dans le véhicule sont capables de calculer, avec une bonne précision grâce à un filtre de Kalman par exemple, la vitesse linéaire Va, ainsi que la vitesse angulaire du point milieu A de l'essieu arrière du véhicule à l'aide de ces codeurs odométriques. Alternativement, un gyromètre peut être utilisé pour calculer la vitesse angulaire du véhicule.

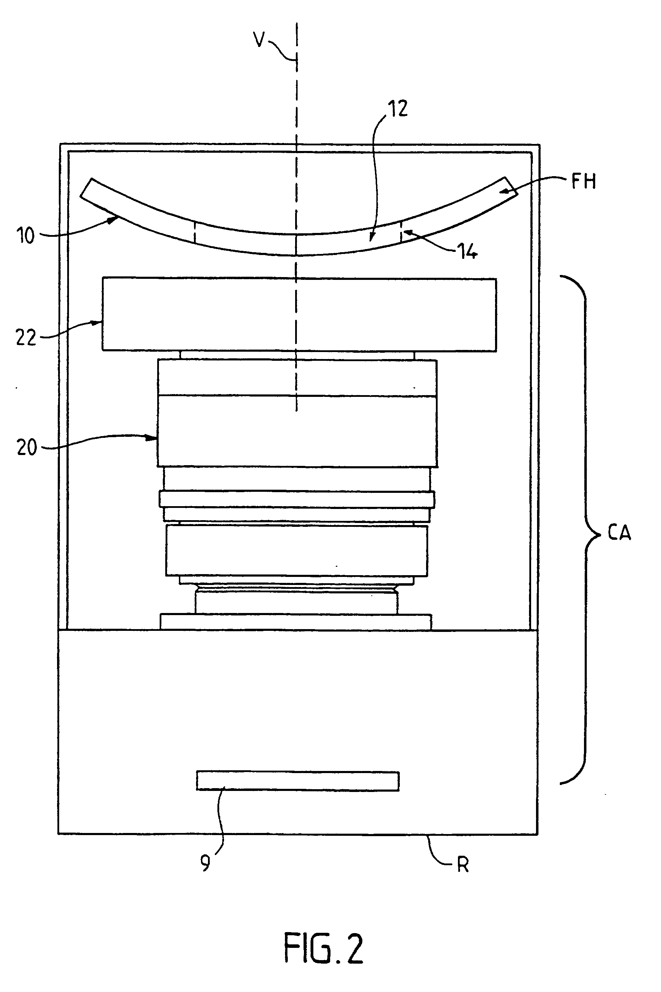

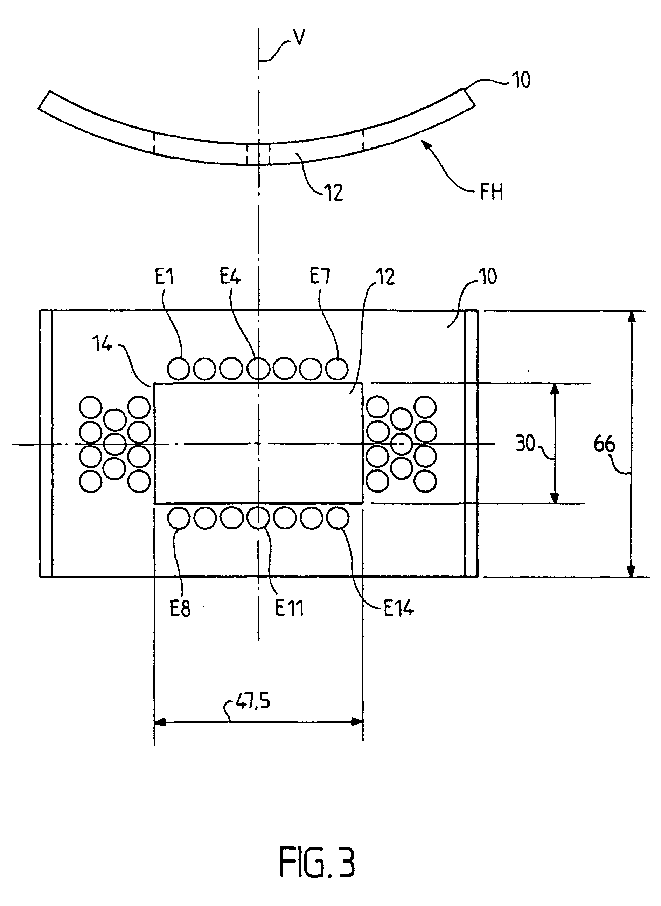

En référence aux figures 2 et 3, l'appareil de repérage R comprend un flash FH orienté dans la même direction que la caméra CA. Le flash FH est disposé sur un support 10 muni d'une ouverture 12 à travers laquelle les faisceaux lumineux sont susceptibles de passer.

A la périphérie 14 de l'ouverture 12 est disposée une pluralité de diodes électroluminescentes E aptes à fonctionner en lumière infrarouge.

Par exemple, l'ouverture 12 est de forme parallélépipédique et le support 10 est de forme concave avec une concavité de quelques degrés. Les dimensions de l'ouverture 12 sont par exemple de 47,5 mm et 30 mm.

A une distance choisie du bord de l'ouverture, par exemple 1 mm, sont disposées des rangées de diodes électroluminescentes. Par exemple, sur chaque grand côté de l'ouverture est disposée une rangée de 7 diodes individualisées en E1 à E7 pour le premier grand côté, et en E8 à E14 pour le second grand côté. Les diodes E4 et E11 sont alignées sur le champ de visée V.

Sur chaque petit côté de l'ouverture, est disposée une rangée de 4 diodes. Avantageusement, d'autres rangées parallèles de 3 ou 4 diodes sont disposées sur les petits côtés de l'ouverture. Bien évidemment, la répartition des diodes peut être différente de celle décrite en référence à la figure 3, en fonction du diagramme de rayonnement recherché. Ainsi, si l'on souhaite éclairer un bas-côté de la route plus qu'un autre, on peut répartir davantage de diodes sur l'un des côté de l'ouverture 12.

La caméra CA comprend une barrette linéaire 9, par exemple à 2048 photo-éléments de type CCD. La longueur de la barrette 9 est de 30 millimètres. Elle est disposée horizontalement le long d'une droite perpendiculaire à l'axe de déplacement du véhicule. En outre de la barrette, la caméra comprend une lentille sphérique 20, de type appareil photographique ayant une focale de 28 mm et une lentille cylindrique 22 ayant une focale f d'environ 100 millimètres, à génératrice horizontale.

Enfin l'ensemble optique est complété par un filtre (non représenté) ne laissant passer que les rayonnements infrarouges.

La caméra peut pointer sensiblement vers le bas, par exemple avec un angle d'environ quelques degrés par rapport au plan horizontal. Le champ de vision de la caméra est ainsi d'environ quelques degrés ($10°$ par exemple) dans le plan vertical, et d'environ $60°$ dans le plan horizontal.

Il est à remarquer que la lentille cylindrique 22 permet d'observer la projection dans le plan horizontal des balises situées dans le champ de vision quelle que soit leur position dans le plan vertical.

La mise au point de l'ensemble optique est réalisée sur une distance d'environ 15 mètres.

La caméra est reliée à des moyens de traitement, embarqués dans le véhicule, qui traitent les informations provenant de la caméra et des moyens de capture d'informations odométriques.

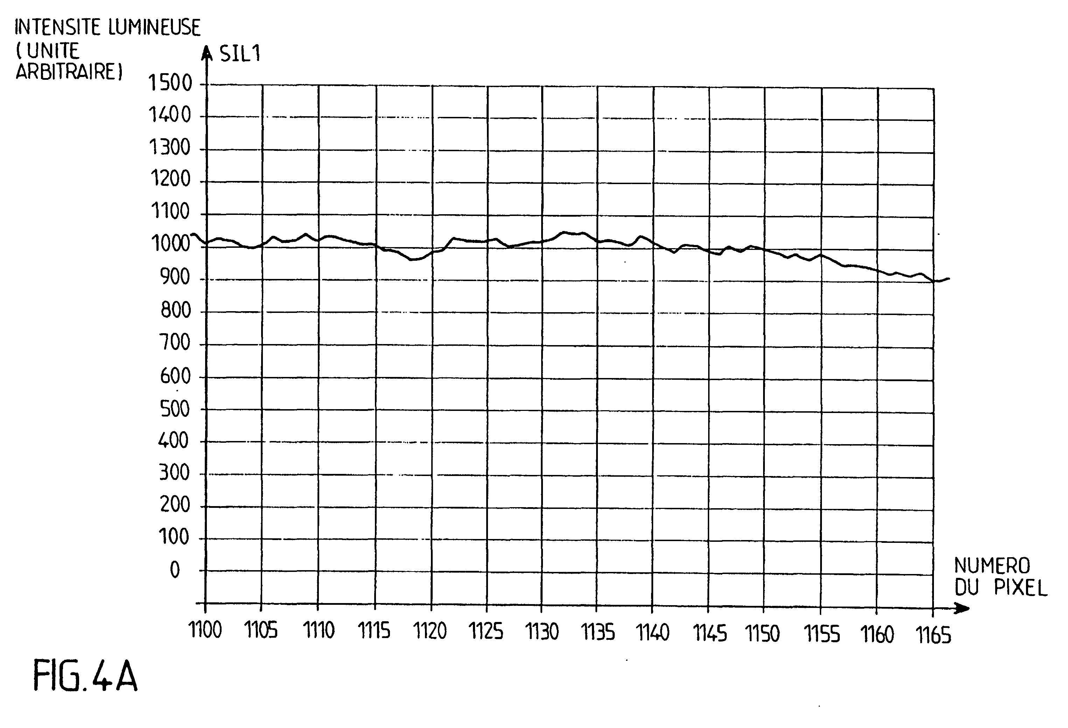

Selon l'invention, deux images linéaires IL1 et IL2 du même champ-image sont prises à une cadence choisie (par exemple 1000 Hz). La première image IL1 (figure 4A) est obtenue sans flash, (ou bien lorsque que la ou les balises sont éteintes dans le cas de balises émettrices de façon active), en présence de soleil le cas échéant.

Le signal SIL1 correspond à la valeur de l'intensité lumineuse des 2048 pixels de la caméra linéaire. Par exemple, la valeur de l'intensité lumineuse des pixels de la caméra linéaire est codés sur 12 bits, c'est-à-dire de 0 à 4096 en unité arbitraire. En référence à la figure 4A, le bruit de fond a une intensité de l'ordre de 1000 pour les pixels allant de 1100 à 1170.

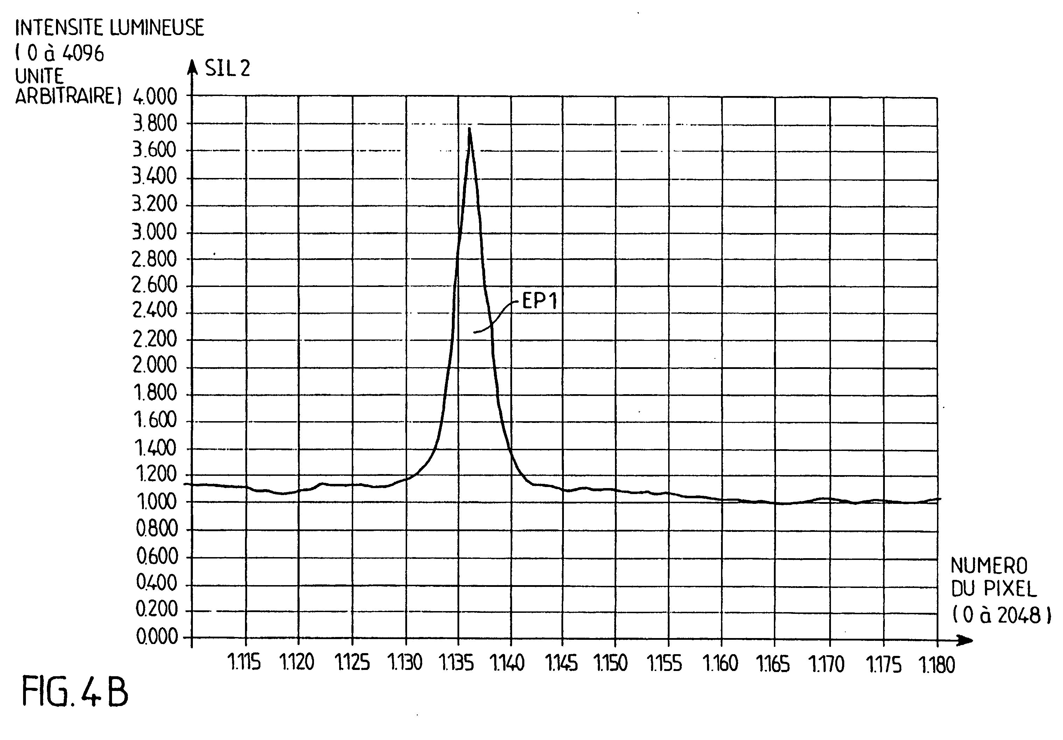

La seconde image IL2 (figure 4B) est obtenue avec flash (ou bien lorsque la ou les balises sont allumées dans le cas de balises lumineuses de façon active). En référence à la figure 4B, les pixels de forte intensité forment un pic EP1 représentatif de la balise lumineuse et la base du pic EP1 a une intensité non nulle en raison du bruit de fond continu.

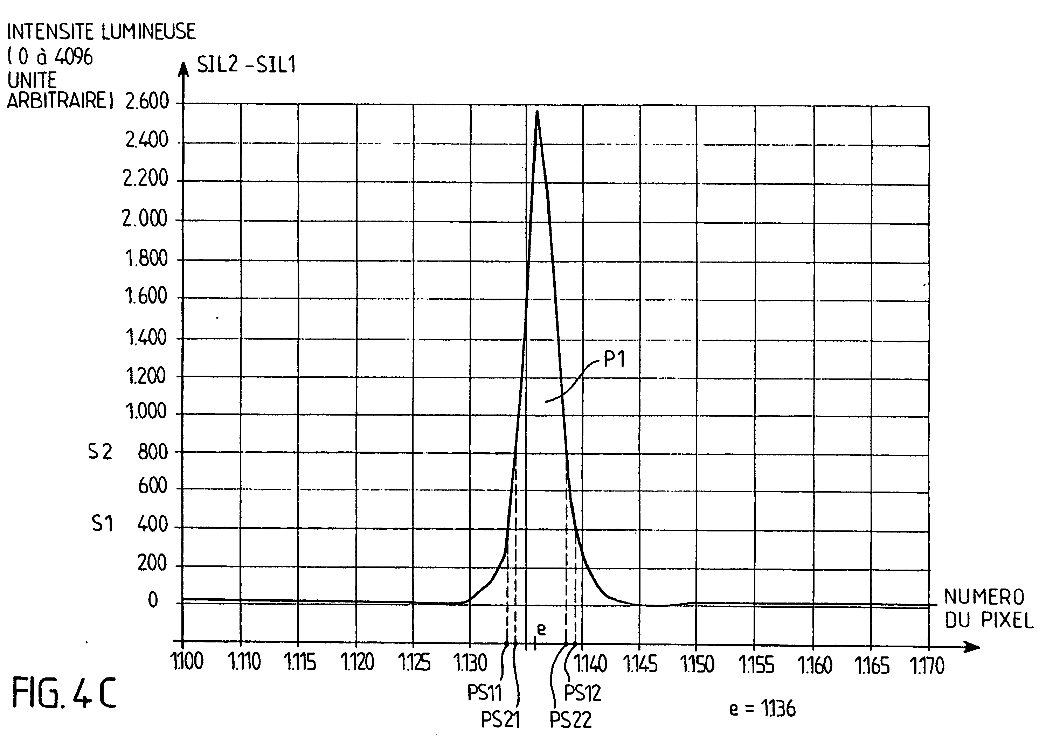

La soustraction point par point des images IL1 et IL2 permet d'obtenir de façon fiable et sans bruit de fond au moins un ensemble de points brillants P1. En référence à la figure 4C, la position centrale e de l'ensemble de points brillants P1 est calculée selon des seuils S1 et S2 établis sur l'intensité du signal correspondant à la soustraction des deux images IL1 et IL2. Par exemple, le seuil S1 est à 400 et le seuil S2 est à 800. la position centrale e est par exemple déduite de la moyenne de l'ensemble des points P1 qui correspond ici au centre des points PS11 et PS12 pour le seuil S1 et au centre des points PS21 et PS22 pour le seuil S2.

La position centrale e sur la barrette linéaire (par exemple e est égal à 1136 sur une échelle de 2048 pixels) représente la balise lumineuse B1 dans l'environnement du mobile tel que décrit en référence à la figure 1.

A partir d'informations relatives au déplacement du mobile (par exemple informations odométriques), de la position e du ou des point(s) brillant(s) P1 sur la barrette linéaire ainsi que de la dérivée é de ladite position e, les moyens de calcul vont déterminer la distance D1 séparant la balise B1 et un repère lié au mobile. En pratique, le repère lié au mobile a pour point d'origine le point A décrit en référence à la figure 1.

Les moyens de calcul vont également déterminer à l'aide des informations précédentes, la position angulaire $\Psi_1$ de la balise B1 par rapport audit repère A lié au mobile.

La résolution de ces informations D1 et tg $\Psi_1$ est obtenue selon les formules I et II en annexe à l'aide des paramètres connus qui sont:

- e : position du point brillant P1 sur la barrette ;

- Va : vitesse linéaire du mobile (grandeur odométrique) ;

- f : distance focale de la caméra ;

- d : distance entre le point milieu A de l'essieu arrière et la barrette linéaire ;

- $\dot{\Psi}$ : dérivée de la position angulaire ou vitesse angulaire (grandeur odométrique)

- $\dot{e}$ : dérivée de e.

A l'issue du calcul, le mobile est localisé de façon relative par rapport à la balise B1.

Une pluralité de balises peut être répartie le long de la chaussée pour définir une trajectoire de référence. Le procédé selon l'invention consiste alors à déterminer la trajectoire de référence définie par les balises en localisant le mobile à l'aide de la localisation relative décrite ci-avant. Ensuite, les moyens de calcul sont aptes à maintenir une certaine distance entre le mobile et ladite trajectoire de référence ainsi déterminée.

Un tel procédé permet au mobile de prédire le tracé suivant de la route en vue par exemple de réguler la vitesse du véhicule. Il permet aussi d'assurer un guidage latéral du mobile par rapport à la trajectoire de référence.

De préférence, les balises sont réparties de telle sorte que le mobile en voit au moins deux, en tout point de son évolution (balises réparties tous les 5 m par exemple).

Pour la mise en oeuvre du pilotage automatique du véhicule selon l'invention, le véhicule doit posséder des possibilités de commande électronique de ses organes de motorisation, de freinage et de direction.

Par exemple, ces commandes électroniques sont issues d'un dispositif micro-informatique embarqué (non représenté) capable d'exécuter des actionneurs de freinage, de direction et de motorisation.

Il peut être également nécessaire d'effectuer une localisation absolue du mobile par rapport à un repère fixe défini par une ou plusieurs balises.

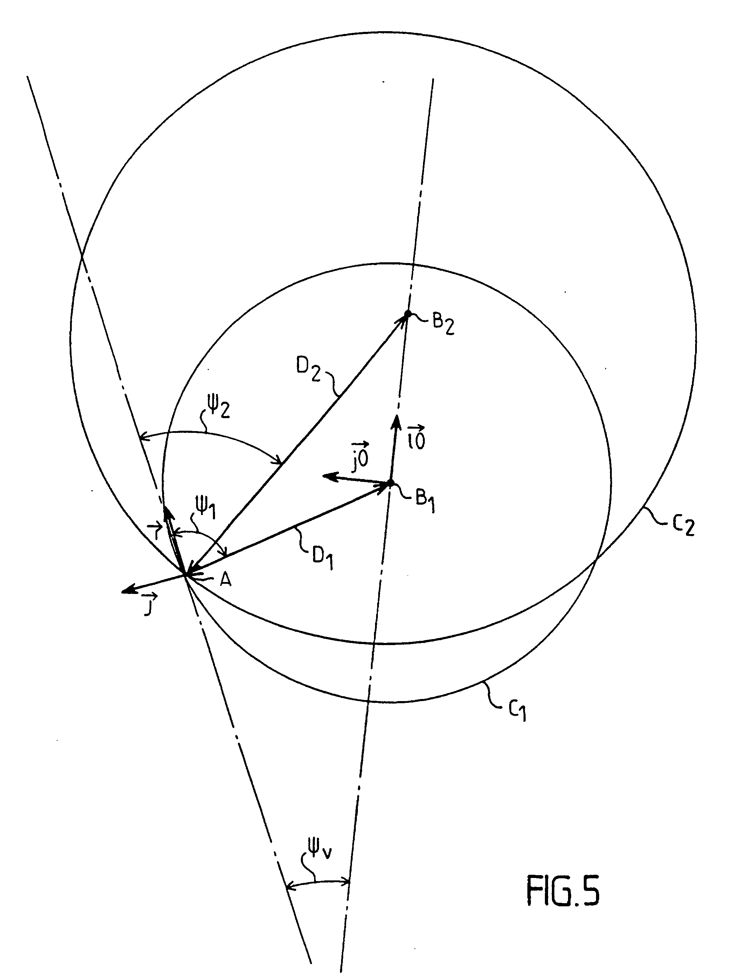

En référence à la figure 5, la localisation absolue est réalisée à l'aide de deux balises B1 et B2, susceptibles d'être vues simultanément et qui définissent un repère fixe RO par rapport au mobile. Dans ce repère RO, la balise B1 a pour coordonnées les valeurs O et O, la balise B2 a pour coordonnées les valeurs $X_{B2}$ et 0 et le point A a pour coordonnées les valeurs $X_A$ et $Y_A$.

On définit le cap du véhicule tg $\Psi_v$ selon les formules III et IV en annexe à l'aide des paramètres (calculés comme décrit en référence à la figure 1) et qui sont :

D1 : distance entre le point A et la balise B1;

D2 : distance entre le point A et la balise B2;

$\Psi_1$ : position angulaire du point A par rapport à B1; et

$\Psi_2$ : position angulaire du point A par rapport à B2.

Les coordonnés du point A sont définies par l'intersection des cercles C1 et C2 de centres respectifs B1 et B2 et de rayons respectifs D1 et D2 selon les formules V et VI.

Les coordonnées du véhicule $X_A$ et $Y_A$ sont déterminées selon les formules VII et VIII.

La localisation absolue est ici réalisée à un seul instant donné par rapport aux balises B1 et B2 vues simultanément par la caméra.

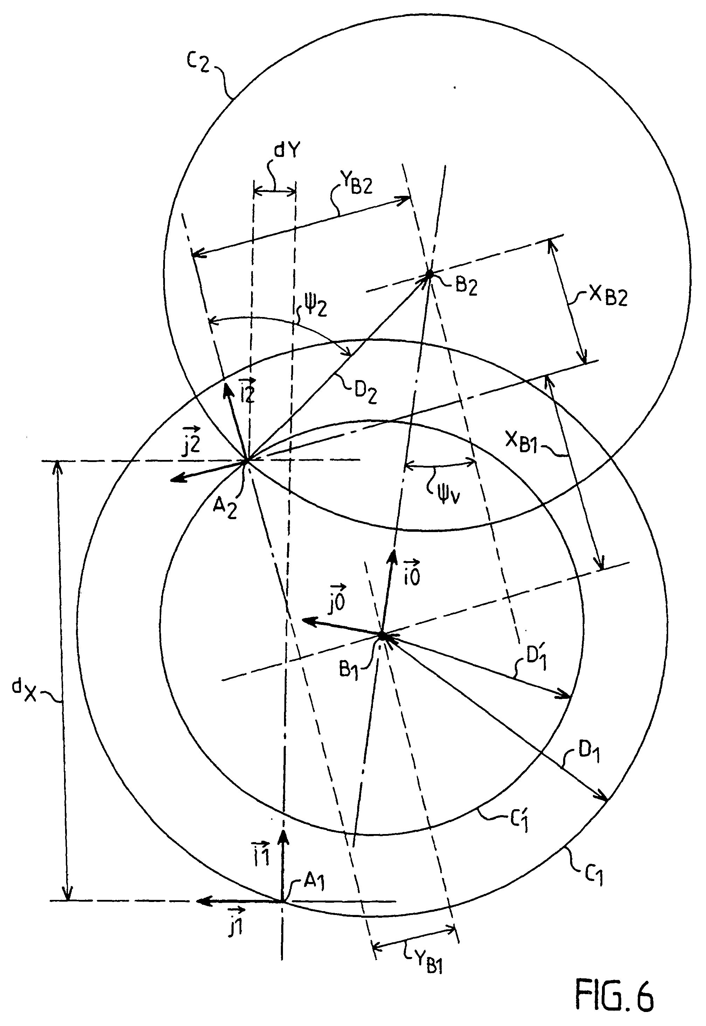

En référence à la figure 6, la localisation absolue est établie à deux instants donnés selon le déplacement du mobile par rapport à deux balises susceptibles d'être vues au moins successivement par la caméra linéaire. La localisation absolue est obtenue à l'aide d'une première localisation relative du mobile par rapport à la balise B1, calculée à un instant donné t1, et d'une seconde localisation relative du mobile par rapport à la balise B2 calculée à un autre instant donné t2, espacé de quelques secondes par rapport au premier instant t1.

A l'instant t1, le mobile voit la balise B1 (position A1). A l'instant t2, le mobile voit la balise B2 (position A2).

Le calcul des deux localisations relatives est réalisé selon une démarche similaire à celle employée pour les localisations relatives décrites en référence à la figure 5. La première localisation permet d'obtenir les paramètres D1 et $\Psi_1$. La seconde localisation permet d'obtenir les paramètres D2 et $\Psi_2$.

En bref, on cherche ici les coordonnées absolues $X_{A2}$ et $Y_{A2}$ du point A2 du mobile dans le repère $R_o$ par intersection de deux cercles C'1 et C2 ainsi que de son cap tg $\Psi_v$ de la façon suivante.

Tout d'abord, 4 référentiels d'étude $R_0$, $R_1$, $R'_1$, $R_2$ sont définis selon la formule IX. Le repère $R_o$ est lié à la balise B1. Les autres repères sont liés au mobile.

On détermine ensuite grâce aux localisations relatives les distances D1 et D2 séparant respectivement le point A1 et la balise B1, et le point A2 et la balise B2 selon la formule II en annexe.

Le mobile est situé sur le cercle C1 de centre B1 et de rayon D1. De même, le point A2 se situe sur le cercle C2 de centre B2 et de rayon D2. Le point A2 est également sur le cercle C'1 de centre B1 et de rayon D'1.

La distance D'1 est celle qui sépare le point A2 de la balise B1.

Il convient ensuite de calculer par odométrie la distance D'1 en fonction des paramètres dX, dY et d$\Psi$ selon les formules X, XI et XII en annexe. Dans ces formules dX est la distance séparant les points A1 et A2 dans le sens longitudinal du déplacement du mobile, dY est la distance séparant les points A1 et A2 du mobile dans le sens transversal du déplacement du mobile et d$\Psi$ est la différence des positions angulaires $\Psi_1$ et $\Psi_2$.

Après résolution de la formule XII, on obtient les coordonnées du point A2 dans le repère $R_o$ selon la formule XIII en annexe.

Le cap du mobile tg $\dot\Psi_v$ en référence à la figure 6 est déterminé selon les formules XIV et XV.

Bien évidemment, le calcul des localisations relatives et/ou absolues peut être établi selon d'autres formules.

On a vu précédemment que la caméra regarde une ou plusieurs balises qui clignotent périodiquement. Ce clignotement permet de supprimer les bruits de fond par différence de deux images consécutives, l'une dans laquelle les balises sont allumées et l'autre dans laquelle les balises sont éteintes. Ainsi la détection des pics (ou points brillants) est beaucoup plus facile et surtout plus fiable.

Toutefois, il peut subsister un problème de synchronisation entre la caméra et les balises lumineuses. En effet, si la caméra réalise la phase d'exposition pendant que les balises lumineuses changent d'état, alors l'image perçue peut être incorrecte.

Une solution à ce problème consiste à mettre en phase le signal d'exposition de la caméra et le signal de clignotement des balises.

Pour mener à bien cette synchronisation, la fréquence de clignotement des balises est choisie identique à la fréquence d'acquisition des lignes de la caméra linéaire. Un écart de fréquence intrinsèque (oscillateur différent, température) est toutefois admis.

Ensuite, il convient de réguler la différence de phase entre les deux signaux électriques. Une solution connue consiste à utiliser des moyens électroniques aptes à réaliser de façon logicielle une boucle à verrouillage de. phase appelée encore PLL pour "Phase Loop Locked". Par exemple, pour rattraper les écarts de phase entre les signaux de la caméra et des balises, la solution logicielle est articulée autour d'une modulation de la période d'acquisition de la caméra.

Dans le cas de balises passives éclairées par un flash, les moyens de synchronisation sont prévus pour synchroniser la commande du flash et la commande de la caméra.

**ANNEXE**

$$\textbf{Formule I} \ : \qquad tg\Psi_1 = \frac{\dot e\left(V_A e + fd\,\dot\Psi\right)}{df\,\dot e + feV_A - e^2 d\,\dot\Psi}$$

$$\textbf{Formule II} \ : \qquad D_1 = \frac{\sqrt{\left(df\,\dot e + feV_A - e^2 d\,\dot\Psi\right)^2 + e^2\left(V_A e + fd\,\dot\Psi\right)^2}}{\left|f\,\dot e - \dot\Psi\left(e^2 + f^2\right)\right|}$$

**Formule III :** $\quad tg\Psi_v = \dfrac{V_A\left(e_2^2\dot{e}_1 - e_1^2\dot{e}_2\right) + fd\,\dot{\Psi}\left(e_2\dot{e}_1 - e_1\dot{e}_2\right) + \dot{\Psi}(e_2 - e_1)\left[\dot{\Psi}d(e_1 e_2 - f^2) - V_A f(e_1 + e_2\right.}{-df^2\dot{\Psi}\left(\dot{e}_2 - \dot{e}_1\right) + fV_A\left(e_2\dot{e}_1 - e_1\dot{e}_2\right) + \dot{\Psi}(e_2 - e_1)\left[V_A(e_1 e_2 - f^2) + fd\,\dot{\Psi}(e_1 + e_2\right.\}}$

**Formule IV :** $\quad tg\Psi_v = \dfrac{D_2 \sin \Psi_2 - D_2 \sin \Psi_1}{D_2 \cos \Psi_2 - D_1 \cos \Psi_1}$

**Formule V :** $\quad \begin{cases} X_A^2 + Y_A^2 = D_1^2 \\ \left(X_A - X_{B_2}\right)^2 + Y_A^2 = D_2^2 \end{cases}$

**Formule VI :** $\quad \begin{cases} X_A = \dfrac{D_1^2 - D_2^2}{2X_{B_1}} + \dfrac{X_{B_1}}{2} \\[4mm] Y_A = \sqrt{D_1^2 - \left(\dfrac{D_1^2 - D_2^2}{2X_{B_1}} + \dfrac{X_{B_1}}{2}\right)^2} \end{cases}$

**Formule VII :**

$$X_A = \dfrac{\left(df\dot{e}_1 + fe_1 V_A - e_1^2 d\dot{\Psi}\right)^2 + e_1^2\left(V_A e_1 + fd\dot{\Psi}\right)^2}{2X_{B_2}\left(f\dot{e}_1 - (e_1^2 + f^2)\dot{\Psi}\right)^2} - \dfrac{\left(df\dot{e}_2 + fe_2 V_A - e_2^2 d\dot{\Psi}\right)^2 + e_2^2\left(V_A e_2 + fd\dot{\Psi}\right)^2}{2X_{B_2}\left(f\dot{e}_2 - (e_2^2 + f^2)\dot{\Psi}\right)^2} + \dfrac{X_{B_2}}{2}$$

**Formule VIII :**

$$Y_A = \sqrt{\dfrac{\left(df\dot{e}_1 + fe_1 V_A - e_1^2 d\dot{\Psi}\right)^2 + e_1^2\left(V_A e_1 + fd\dot{\Psi}\right)^2}{\left(f\dot{e}_1 - (e_1^2 + f^2)\dot{\Psi}\right)^2} - \left(\dfrac{\left(df\dot{e}_1 + fe_1 V_A - e_1^2 d\dot{\Psi}\right)^2 + e_1^2\left(V_A e_1 + fd\dot{\Psi}\right)^2}{2X_{B_2}\left(f\dot{e}_1 - (e_1^2 + f^2)\dot{\Psi}\right)^2} - \dfrac{\left(df\dot{e}_2 + fe_2 V_A - e_2^2 d\dot{\Psi}\right)^2 + e_2^2\left(V_A e_2 + fd\dot{\Psi}\right)^2}{2X_{B_2}\left(f\dot{e}_2 - (e_2^2 + f^2)\dot{\Psi}\right)^2} + \dfrac{X_{B_2}}{2}\right)}$$

**Formule IX :** $\quad \begin{cases} R_0 = \left(B_1, \bar{i}_0, \bar{j}_0\right) \\ R_1 = \left(A_1, \bar{i}_1, \bar{j}_1\right) \\ R'_1 = \left(A_2, \bar{i}_1, \bar{j}_1\right) \\ R_2 = \left(A_2, \bar{i}_2, \bar{j}_2\right) \end{cases}$

$$\text{Formule X} \quad : \quad \begin{cases} X_{B_1/R'_1} = X_{B_1/R_1} - dX \\ Y_{B_1/R'_1} = Y_{B_1/R_1} - dY \end{cases}$$

$$\text{Formule XI :} \qquad D'_1 = \sqrt{(X_{B_1/R_1} - dX)^2 + (Y_{B_1/R_1} - dY)^2}$$

$$\text{Formule XII :} \qquad \begin{cases} C'_1 : X^2 + Y^2 = D'^2_1 \\ C_2 : (X - X_{B_2})^2 + Y^2 = D_2^2 \end{cases}$$

$$\text{Formule XIII :} \qquad \begin{cases} X_{A2} = \dfrac{D'^2_1 - D^2_2}{2 X_{B_2}} + \dfrac{X_{B_2}}{2} \\ Y_{A2} = \sqrt{D'^2_1 - \left( \dfrac{D'^2_1 - D^2_2}{2 X_{B_2}} + \dfrac{X_{B_2}}{2} \right)^2} \end{cases}$$

$$\text{Formule XIV :} \qquad \begin{cases} X_{B_1/R2} = \left(X_{B_1/R_1} - dX\right)\cos(d\Psi) + \left(Y_{B_1/R_1} - dY\right)\sin(d\Psi) \\ Y_{B_1/R2} = \left(Y_{B_1/R_1} - dY\right)\cos(d\Psi) - \left(X_{B_1/R_1} - dX\right)\sin(d\Psi) \end{cases}$$

$$\text{Formule XV :} \qquad tg\Psi_v = \frac{D_2 \sin \Psi_2 + Y_{B_1/R_2}}{D_2 \cos \Psi_2 - X_{B_1/R_2}}$$

**Revendications**

1. Procédé de localisation d'un mobile, muni d'une caméra de prise de vues de type à barrette linéaire d'éléments photosensibles (CA), orientée en direction connue par rapport à des axes de référence liés au mobile, des moyens de traitement d'images, ainsi que des moyens de capture d'informations (ODO) relatives au déplacement du mobile (M), **caractérisé en ce qu'**il comporte les étapes consistant à :

   - a) répartir dans la zone d'évolution du mobile des balises (B1,B2) fixes, lumineuses à intermittence de façon active et/ou passive,

   - b) au niveau du mobile (M), prendre à une cadence choisie une paire d'images linéaires (IL1 et IL2) différentes du même champ-image, l'une dans laquelle la ou les balises sont lumineuses, l'autre dans laquelle la ou les balises ne sont pas lumineuses,

   - c) traiter la paire d'images linéaires pour en effectuer la soustraction point par point,

   - d) obtenir au moins un point brillant (P1) à l'aide de la soustraction des deux images linéaires (IL1 et IL2), représentatif d'au moins une balise lumineuse dans l'environnement, et

- e) calculer, à partir d'informations relatives au déplacement du mobile, de la position (e) du point brillant (P1) sur la barrette linéaire, ainsi que de sa dérivée, une première information relative à la distance (D1) séparant la balise ainsi représentée (B1) et un repère (A) lié au mobile, et une seconde information relative à une position angulaire de la balise par rapport audit repère lié au mobile, ce qui permet, en fonction des première et seconde informations ainsi calculées, de localiser de façon relative le mobile par rapport à ladite balise.

2. Procédé selon la revendication 1, **caractérisé en ce que** l'étape e) comprend en outre une localisation absolue du mobile par rapport à un repère fixe défini à l'aide de deux balises distinctes susceptibles d'être vues simultanément, ladite localisation absolue consistant à calculer à un instant donné une localisation relative du mobile par rapport à chaque balise selon la revendication 1, à calculer le cap du mobile par rapport aux deux balises, et à calculer les coordonnées d'un point choisi du mobile par rapport audit repère fixe lié aux deux balises.

3. Procédé selon la revendication 1, **caractérisé en ce que** l'étape e) comprend en outre une localisation absolue du mobile par rapport à un repère fixe ($R_o$) lié à deux balises susceptibles d'être vues au moins successivement selon le déplacement du mobile (B1, B2), ladite localisation absolue consistant à calculer à un premier instant donné une première localisation relative du mobile par rapport à la première balise selon la revendication 1, à calculer à un second instant donné, suivant du premier instant, une seconde localisation relative du mobile par rapport à la seconde balise qui suit la première selon la revendication 1, à calculer par odométrie le déplacement du mobile et le cap du mobile par rapport auxdites première et seconde balises et à calculer les coordonnées d'un point choisi (A2) du mobile par rapport audit repère fixe ($R_o$).

4. Procédé selon l'une des revendications précédentes, dans lequel une pluralité de balises (B1, B2,...) est répartie le long de la chaussée (CH) pour définir une trajectoire de référence, et le procédé comprend en outre une étape f) consistant à déterminer ladite trajectoire de référence à l'aide de la localisation relative et/ou absolue du mobile par rapport auxdites balises selon l'une des revendications 1 à 3 et à guider le mobile en maintenant une certaine distance entre le mobile et ladite trajectoire de référence.

5. Dispositif de localisation d'un mobile, muni d'une caméra (CA) de prise de vues de type à barrette linéaire d'éléments photosensibles, orientée en direction connue par rapport à des axes de référence liés au mobile, des moyens de traitement d'images, ainsi que des moyens de capture d'informations (ODO) relatives au déplacement du mobile,
**caractérisé en ce qu'**il comprend des balises fixes, lumineuses à intermittence de façon active et/ou passive, et réparties dans la zone d'évolution du mobile,
**en ce que** la caméra linéaire (CA) est apte à prendre à une cadence choisie une paire d'images linéaires différentes (IL1 et IL2) du même champ-image, l'une dans laquelle la ou les balises sont lumineuses, l'autre dans laquelle les balises ne sont pas lumineuses,
**en ce que** les moyens de traitement d'images sont aptes à traiter la paire d'images linéaires pour en effectuer la soustraction point par point, et obtenir au moins un point brillant (P1) à l'aide de la soustraction des deux images linéaires, représentatif d'au moins une balise dans l'environnement,
**en ce que** le mobile comprend des moyens de calcul propres à calculer à partir d'informations relatives au déplacement du mobile, de la position (e) du point brillant (P1) sur la barrette linéaire, ainsi que de sa dérivée, une première information relative à la distance (D1) séparant la balise ainsi représentée et un repère (A) lié au mobile, et une seconde information relative à une position angulaire de la balise par rapport audit repère lié au mobile, ce qui permet de localiser de façon relative le mobile par rapport à ladite balise.

6. Dispositif selon la revendication 5, **caractérisé en ce que** les moyens de calcul sont propres à effectuer une localisation absolue du mobile par rapport à un repère fixe défini à l'aide de deux balises distinctes (B1 et B2) susceptibles d'être vues simultanément, lesdits moyens de calcul étant propres à calculer, à un instant donné, une localisation relative par rapport à chaque balise selon la revendication 5, le cap du mobile par rapport auxdites balises (B1 et B2) et les coordonnées d'un point choisi du mobile par rapport audit repère fixe lié auxdites deux balises.

7. Dispositif selon la revendication 5, **caractérisé en ce que** les moyens de calcul sont propres à effectuer une localisation absolue du mobile par rapport à deux balises susceptibles d'être vues au moins successivement selon le déplacement du mobile, lesdits moyens de calcul étant propres à calculer à un premier instant donné une première localisation relative du mobile par rapport à la première balise selon la revendication 5, à calculer à un second instant donné, suivant du premier instant, une seconde localisation relative du mobile par rapport à la seconde balise qui suit la première selon la revendication 5, à calculer par odométrie le déplacement du mobile et le cap du mobile par rapport auxdites première et seconde balises et à calculer les coordonnées d'un point choisi (A2) du mobile par rapport audit repère fixe (R$_o$).

8. Dispositif selon l'une des revendications 5 à 7, dans lequel une pluralité de balises est répartie le long de la chaussée (CH) pour définir une trajectoire de référence, le dispositif étant **caractérisé par le fait que** les moyens de calcul sont aptes à déterminer ladite trajectoire de référence à l'aide de la localisation relative et/ou absolue du mobile par rapport auxdites balises selon l'une des revendications 5 à 7 et à guider le mobile en maintenant une certaine distance entre le mobile et ladite trajectoire de référence.

9. Dispositif selon l'une des revendications 5 à 8, dans lequel les balises lumineuses (B1, B2) sont de type rétroréflectrices, **caractérisée en ce que** le mobile comprend en outre un flash propre à éclairer par intermittence lesdites balises lumineuses de façon passive, la commande du flash et de la caméra étant synchrones.

10. Dispositif selon la revendication 9, **caractérisé en ce que** le flash (FH) comprend un support (10) orienté dans la même direction que la caméra, muni d'une ouverture (12) à travers laquelle passent les rayonnements lumineux pour atteindre la caméra et sur le pourtour de laquelle est disposée une pluralité de diodes électroluminescentes (EL).

11. Dispositif selon la revendication 10, **caractérisé en ce que** le support (10) du flash est de forme générale concave.

12. Dispositif selon la revendication 9, dans lequel les balises sont lumineuses de façon passive, **caractérisé en ce que** le mobile comprend des moyens de synchronisation propres à mettre en phase le signal d'acquisition de la caméra et le signal lumineux du flash.

13. Dispositif selon la revendication 5, dans lequel les balises sont lumineuses de façon active, **caractérisé en ce que** le mobile comprend des moyens de synchronisation propres à mettre en phase le signal d'acquisition de la caméra et le signal lumineux des balises.

**Patentansprüche**

1. Verfahren zur Ortung eines Fahrzeugs, versehen mit einer bezüglich mit dem Fahrzeug verbundener Bezugsachsen in einer bekannten Richtung ausgerichteten Bildaufnahmekamera des Typs mit einer Linearanordnung photosensibler Elemente (CA), und versehen mit Bildverarbeitungseinrichtungen sowie Erfassungseinrichtungen von Informationen (ODO) bezüglich der Bewegung des Fahrzeugs (M),
**dadurch gekennzeichnet,**
**dass** es die folgenden Schritte umfasst:

a) Verteilen von ortsfesten Baken (B1, B2) in der Fortbewegungszone des Fahrzeugs, die intermittierend in aktiver und/oder passiver Weise leuchten,
b) Aufnehmen - mit einem gewählten Takt - eines Paars unterschiedlicher linearer Bilder (IL1 und IL2) desselben Bildfelds von dem Fahrzeug (M) aus, das eine mit leuchtender Bake oder leuchtenden Baken und das andere mit nicht leuchtender Bake oder nicht leuchtenden Baken,
c) Verarbeiten des Paars linearer Bilder, um Punkt für Punkt die Subtraktion durchzuführen,
d) Erlangen wenigstens eines leuchtenden bzw. hervorstechenden Punkts (P1) mit Hilfe der Subtraktion der beiden linearen Bilder (IL1 und IL2), repräsentativ für wenigstens eine leuchtende Bake in der Umgebung, und
e) Berechnen - aufgrund der Informationen bezüglich der Bewegung des Fahrzeugs, aus der Position (e) des leuchtenden bzw. hervorstechenden Punkts (P1) auf der Linearanordnung sowie aus seiner Abweichung - einer ersten Information bezüglich der Distanz (D1), die die derart dargestellte Bake (B1) und einen mit dem Fahrzeug verbundenen Bezugspunkt (A) trennt, und einer zweiten Information bezüglich einer Winkelposition der Bake in Bezug auf den genannten mit dem Fahrzeug verbundenen Bezugspunkt, was ermöglicht, das Fahrzeug in Abhängigkeit von den derart berechneten ersten und zweiten Informationen in Bezug auf die genannte Bake auf relative Weise zu orten.

2. Verfahren nach Anspruch 1, **dadurch gekennzeichnet, dass** der Schritt e) außerdem eine absolute Ortung des Fahrzeugs in Bezug auf einen festen Bezugspunkt umfasst, definiert mit Hilfe von zwei verschiedenen Baken, die simultan gesehen werden können, wobei die genannte absolute Ortung darin besteht, zu einem bestimmten Zeitpunkt eine relative Ortung des Fahrzeugs in Bezug auf jede Bake nach Anspruch 1 zu berechnen, den Kurs des Fahrzeugs in Bezug auf die beiden Baken zu berechnen, und die Koordinaten eines gewählten Punkts des Fahrzeugs in Bezug auf den genannten, mit den beiden Baken verbundenen festen Bezugspunkt zu berechnen.

3. Verfahren nach Anspruch 1, **dadurch gekennzeichnet, dass** der Schritt e) außerdem eine absolute Ortung des Fahrzeugs in Bezug auf ein festes Bezugssystem ($R_o$) umfasst, definiert mit Hilfe von zwei verschiedenen Baken (B1, B2), die wenigstens sukzessive entsprechend der Bewegung des Fahrzeugs gesehen werden können, wobei die genannte absolute Ortung darin besteht, zu einem ersten bestimmten Zeitpunkt eine erste relative Ortung des Fahrzeugs in Bezug auf die erste Bake nach Anspruch 1 zu berechnen, zu einem dem ersten Zeitpunkt folgenden zweiten bestimmten Zeitpunkt eine zweite relative Ortung des Fahrzeugs in Bezug auf die auf die erste Bake folgende zweite Bake nach Anspruch 1 zu berechnen, durch Wegmessung die Bewegung des Fahrzeugs und den Kurs des Fahrzeugs in Bezug auf die erste und die zweite Bake zu berechnen, und die Koordinaten eines gewählten Punkts (A2) des Fahrzeugs in Bezug auf den genannten festen Bezugspunkt ($R_o$) zu berechnen.

4. Verfahren nach einem der vorangehenden Ansprüche, bei dem eine Vielzahl von Baken (B1, B2, ...) längs der Fahrbahn (CH) verteilt ist, um eine Bezugsbahn zu definieren, wobei das Verfahren außerdem einen Schritt f) umfasst, darin bestehend, die genannte Bezugsbahn mit Hilfe der relativen und/oder absoluten Ortung des Fahrzeugs in Bezug auf die genannten Baken nach einem der Ansprüche 1 bis 3 festzulegen und das Fahrzeug zu lenken und dabei eine bestimmte Distanz zwischen dem Fahrzeug und der genannten Bezugsbahn aufrechtzuerhalten bzw. einzuhalten.

5. Verfahren zur Ortung eines Fahrzeugs, versehen mit einer bezüglich mit dem Fahrzeug verbundener Bezugsachsen in einer bekannten Richtung ausgerichteten Bildaufnahmekamera (CA) des Typs mit einer Linearanordnung photosensibler Elemente, und versehen mit Bildverarbeitungseinrichtungen sowie Erfassungseinrichtungen von Informationen (ODO) bezüglich der Bewegung des Fahrzeugs (M),
**dadurch gekennzeichnet, dass** es ortsfeste Baken umfasst, verteilt in der Fortbewegungszone des Fahrzeugs, die intermittierend in aktiver und/oder passiver Weise leuchten,
dass die Linearkamera (CA) fähig ist, mit einem gewählten Takt ein Paar unterschiedlicher linearer Bilder (IL1 und IL2) desselben Bildfelds aufzunehmen, wobei in einem die Bake oder Baken leuchten und in dem anderen die Bake oder Baken nicht leuchten,
dass die Bildverarbeitungseinrichtungen fähig sind, das Paar linearer Bilder zu verarbeiten, um Punkt für Punkt die Subtraktion durchzuführen und mit Hilfe der Subtraktion der beiden linearen Bilder wenigstens einen leuchtenden bzw. hervorstechenden Punkt (P1) zu erhalten, repräsentativ für wenigstens eine Bake in der Umgebung,
dass das Fahrzeug Recheneinrichtungen umfasst, fähig aufgrund von Informationen bezüglich der Bewegung des Fahrzeugs aus der Position (e) des leuchtenden bzw. hervorstechenden Punkts (P1) auf der Linearanordnung sowie aus seiner Abweichung eine erste Information bezüglich der Distanz (D1), die die derart dargestellte Bake (B1) und einen mit dem Fahrzeug verbundenen Bezugspunkt (A) trennt, und eine zweite Information bezüglich einer Winkelposition der Bake in Bezug auf den genannten mit dem Fahrzeug verbundenen Bezugspunkt zu berechnen, was ermöglicht, das Fahrzeug in Abhängigkeit von den derart berechneten ersten und zweiten Informationen in Bezug auf die genannte Bake auf relative Weise zu orten.

6. Vorrichtung nach Anspruch 5, **dadurch gekennzeichnet, dass** die Recheneinrichtungen fähig sind, eine absolute Ortung des Fahrzeugs in Bezug auf einen festen Bezugspunkt durchzuführen, definiert mit Hilfe von zwei verschiedenen Baken (B1 und B2), die simultan gesehen werden können, wobei die genannten Recheneinrichtungen fähig sind, zu einem bestimmten Zeitpunkt eine relative Ortung in Bezug auf jede Bake nach Anspruch 5 zu berechnen, den Kurs des Fahrzeugs in Bezug auf die genannten beiden Baken (B1 und B2) zu berechnen und die Koordinaten eines gewählten Punkts des Fahrzeugs in Bezug auf den genannten, mit den beiden Baken verbundenen festen Bezugspunkt zu berechnen.

7. Vorrichtung nach Anspruch 5, **dadurch gekennzeichnet, dass** die Recheneinrichtungen fähig sind, eine absolute Ortung des Fahrzeugs in Bezug auf zwei Baken durchzuführen, die entsprechend der Bewegung des Fahrzeugs wenigstens nacheinander gesehen werden können, wobei die Recheneinrichtungen fähig sind, in einem ersten bestimmten Zeitpunkt eine erste relative Ortung des Fahrzeugs in Bezug auf die erste Bake nach Anspruch 5 durchzuführen, in einem dem ersten Zeitpunkt folgenden zweiten bestimmten Zeitpunkt eine zweite relative Ortung des Fahrzeugs in Bezug auf die zweite Bake nach Anspruch 5 durchzuführen, mittels Wegmessung die Bewegung des Fahrzeugs und den Kurs des Fahrzeugs in Bezug auf die erste und die zweite Bake zu berechnen und die Koordinaten eines gewählten Punkts (A2) des Fahrzeugs in Bezug auf den genannten festen Bezugspunkt ($R_o$)

zu berechnen.

**8.** Vorrichtung nach einem der Ansprüche 5 bis 7, bei der eine Vielzahl von Baken längs der Fahrbahn (CH) verteilt ist, um einen Bezugsbahn zu definieren, wobei die Vorrichtung **dadurch gekennzeichnet ist, dass** die Recheneinrichtungen fähig sind, die genannte Bezugsbahn mit Hilfe der relativen und/oder absoluten Ortung des Fahrzeugs in Bezug auf die Baken nach einem der Ansprüche 5 bis 7 durchzuführen und das Fahrzeug zu lenken und dabei eine bestimmte Distanz zwischen dem Fahrzeug und der genannten Bezugsbahn aufrechtzuerhalten bzw. einzuhalten.

**9.** Vorrichtung nach einem der Ansprüche 5 bis 8, bei der die leuchtenden Baken (B1, B2) vom reflektierenden Typ sind, **dadurch gekennzeichnet, dass** das Fahrzeug außerdem eine Blitzlichteinrichtung umfasst, fähig die genannten leuchtenden Baken intermittierend in passiver Weise leuchten zu lassen, wobei die Blitzlichteinrichtung und die Kamera synchron gesteuert werden.

**10.** Vorrichtung nach Anspruch 9, **dadurch gekennzeichnet, dass** die Blitzlichteinrichtung (FH) einen Träger (10) umfasst, ausgerichtet in derselben Richtung wie die Kamera und versehen mit einer Öffnung (12), die die Lichtstrahlen durchqueren, um die Kamera zu erreichen, auf deren äußerem Umfang sich eine Vielzahl von Lumineszenzdioden (EL) befindet.

**11.** Vorrichtung nach Anspruch 10, **dadurch gekennzeichnet, dass** der Träger (10) der Blitzlichteinrichtung von generell konkaver Form ist.

**12.** Vorrichtung nach Anspruch 9, bei der die Baken in passiver Weise leuchten, **dadurch gekennzeichnet, dass** das Fahrzeug Synchronisationseinrichtungen umfasst, die fähig sind, das Erfassungssignal der Kamera und das Leuchtsignal der Blitzlichteinrichtung in Phase zu bringen.

**13.** Vorrichtung nach Anspruch 5, bei der die Baken in aktiver Weise leuchten, **dadurch gekennzeichnet, dass** das Fahrzeug Synchronisationseinrichtungen umfasst, die fähig sind, das Erfassungssignal der Kamera und das Leuchtsignal der Blitzlichteinrichtung in Phase zu bringen.

**Claims**

**1.** Method for locating a moving body equipped with a camera of the type comprising a linear array of photosensitive elements (CA), aimed in a known direction with respect to reference axes associated with the moving body, image processing means, and means (ODO) for capturing information relating to the movement of the moving body (M), **characterized in that** it involves the steps consisting in:

- a) distributing in the zone in which the moving body moves, fixed beacons (B1, B2) which are intermittently illuminated either actively and/or passively,
- b) at the moving body (M) and at a chosen rate, taking a pair of different linear images (IL1 and IL2) of the same image field, one of the images being one in which the beacon or beacons are illuminated, the other being one in which the beacon or beacons are not illuminated,
- c) processing the pair of linear images so as to effect a point-by-point subtraction of one from the other,
- d) obtaining at least one bright spot (P1) from the subtraction of the two linear images (IL1 and IL2), this spot representing at least one light beacon in the environment, and
- e) calculating, on the basis of information relating to the movement of the moving body, the position (e) of the bright spot (P1) on the linear array, and its derivative, a first item of information relating to the distance (D1) separating the beacon thus represented (B1) and a frame of reference (A) associated with the moving body, and a second item of information relating to an angular position of the beacon with respect to the said frame of reference associated with the moving body, thus making it possible, as a function of the first and second items of information thus calculated, to locate the moving body in relative terms with respect to the said beacon.

**2.** Method according to Claim 1, **characterized in that** step e) further comprises locating the moving body in absolute terms with respect to a fixed frame of reference defined using two separate beacons which can be seen simultaneously, the said absolute location consisting in calculating, at a given instant, a relative location of the moving body with respect to each beacon according to Claim 1, in calculating the heading of the moving body with respect to the two beacons, and in calculating the coordinates of a chosen point of the moving body with respect to the said fixed frame of reference associated with the two beacons.

3. Method according to Claim 1, **characterized in that** step e) further comprises locating the moving body in absolute terms with respect to a fixed frame of reference ($R_0$) associated with two beacons which can be seen at least in turn as the moving body moves along (B1, B2), the said absolute location consisting in calculating, at a first given instant, a first relative location of the moving body with respect to the first beacon according to Claim 1, in calculating, at a second given instant, after the first instant, a second relative location of the moving body with respect to the second beacon which follows the first according to Claim 1, in using odometry to calculate the movement of the moving body and the heading of the moving body with respect to the said first and second beacons and in calculating the coordinates of a chosen point (A2) of the moving body with respect to the said fixed frame of reference ($R_0$).

4. Method according to one of the preceding claims, in which a number of beacons (B1, B2,...) are distributed along the roadway (CH) to define a reference path, and the method further comprises a step f) which consists in determining the said reference path using the relative and/or absolute location of the moving body with respect to the said beacons according to one of Claims 1 to 3, and in guiding the moving body, keeping a certain distance between the moving body and the said reference path.

5. Device for locating a moving body equipped with a camera (CA) of the type comprising a linear array of photosensitive elements aimed in a known direction with respect to reference axes associated with the moving body, image processing means and means (ODO) for capturing information relating to the movement of the moving body, **characterized in that** it comprises fixed beacons which are intermittently illuminated either actively and/or passively, and distributed in the zone in which the moving body moves,
**in that** the linear camera (CA) is capable, at a chosen rate, of taking a pair of different linear images (IL1 and IL2) of the same image field, one of the images being one in which the beacon or beacons are illuminated, the other being one in which the beacons are not illuminated,
**in that** the image processing means are capable of processing the pair of linear images to perform the point-by-point subtraction of one from the other and obtaining at least one bright spot (P1) from the subtraction of the two linear images, this spot representing at least one beacon in the environment,
**in that** the moving body comprises calculation means capable of calculating, on the basis of information relating to the movement of the moving body, the position (e) of the bright spot (P1) on the linear array, and its derivative, a first item of information relating to the distance (D1) separating the beacon thus represented and a frame of reference (A) associated with the moving body, and a second item of information relating to an angular position of the beacon with respect to the said frame of reference associated with the moving body, thus making it possible to locate the moving body in relative terms with respect to the said beacon.

6. Device according to Claim 5, **characterized in that** the calculation means are capable of locating the moving body in absolute terms with respect to a fixed frame of reference defined using two separate beacons (B1 and B2) which can be seen simultaneously, the said calculation means being capable of calculating, at a given instant, a relative location with respect to each beacon according to Claim 5, the heading of the moving body with respect to the said beacons (B1 and B2) and the coordinates of a chosen point of the moving body with respect to the said fixed frame of reference associated with the said two beacons.

7. Device according to Claim 5, **characterized in that** the calculation means are capable of locating the moving body in absolute terms with respect to two beacons which can be seen at least in turn as the moving body moves along, the said calculation means being capable of calculating, at a first given instant, a first relative location of the moving body with respect to the first beacon according to Claim 5, of calculating, at a second given instant, after the first instant, a second relative location of the moving body with respect to the second beacon which follows the first according to Claim 5, of using odometry to calculate the movement of the moving body and the heading of the moving body with respect to the said first and second beacons and of calculating the coordinates of a chosen point (A2) of the moving body with respect to the said fixed frame of reference ($R_0$).

8. Device according to one of Claims 5 to 7, in which a number of beacons are distributed along the roadway (CH) to define a reference path, the device being **characterized in that** the calculation means are capable of determining the said reference path using the relative and/or absolute location of the moving body with respect to the said beacons according to one of Claims 5 to 7, and of guiding the moving body, keeping a certain distance between the moving body and the said reference path.

9. Device according to one of Claims 5 to 8, in which the light beacons (B1, B2) are of the retroreflective type, **characterized in that** the moving body further comprises a flash capable of intermittently passively illuminating the said light beacons, the flash and the camera being controlled synchronously.

10. Device according to Claim 9, **characterized in that** the flash (FH) comprises a support (10) aimed in the same direction as the camera, equipped with an opening (12) through which the light radiation passes to reach the camera and on the periphery of which there are a number of light-emitting diodes (EL).

11. Device according to Claim 10, **characterized in that** the support (10) for the flash is of concave overall shape.

12. Device according to Claim 9, in which the beacons are passively illuminated, **characterized in that** the moving body comprises synchronization means capable of bringing the camera acquisition signal into phase with the light signal from the flash.

13. Device according to Claim 5, in which the beacons are actively illuminated, **characterized in that** the moving body comprises synchronization means capable of bringing the camera acquisition signal into phase with the light signal from the beacons.

FIG.1

FIG.2

FIG. 3

INTENSITE LUMINEUSE
(UNITE
ARBITRAIRE)

SIL1

NUMERO
DU PIXEL

FIG.4A

EP 1 027 636 B1

FIG. 4 B

INTENSITE LUMINEUSE
( 0 à 4096
UNITE
ARBITRAIRE)

SIL 2

4.000
3.800
3.600
3.400
3.200
3.000
2.800
2.600
2.400
2.200
2.000
1.800
1.600
1.400
1.200
1.000
0.800
0.600
0.400
0.200
0.000

EP 1

1.115  1.120  1.125  1.130  1.135  1.140  1.145  1.150  1.155  1.160  1.165  1.170  1.175  1.180

NUMERO
DU PIXEL
( 0 à 2048 )

EP 1 027 636 B1

19

FIG. 4 C

INTENSITE LUMINEUSE
(0 à 4096
UNITE
ARBITRAIRE)

SIL2 −SIL1

NUMERO
DU PIXEL

e = 1.136

EP 1 027 636 B1

FIG.5

FIG.6